# EUROPEAN PATENT SPECIFICATION

(11) **EP 1 734 277 B1**
(45) Date of publication and mention of the grant of the patent: **25.08.2010**
(21) Application number: 06076244.0
(22) Date of filing: 15.06.2006
(51) Int. Cl.: F16F 9/58, B60G 17/02, B62K 25/04

(54) **Spring device for a motor vehicle, having a compression spring with a variable spring characteristic**
Federvorrichtung für ein Kraftfahrzeug einschliesslich Druckfeder mit variabler Federcharakteristik
Ressort pour véhicule automobile avec ressort à compression ayant une caractéristique variable

(30) Priority: 16.06.2005 NL 1029266
(43) Date of publication of application: 20.12.2006
(73) Proprietor: WP Suspension B.V., 6581 KA Malden (NL)
(72) Inventor: Lindeman, Eric Alexander, 6642 AR Beuningen (NL)
(74) Representative: Riemens, Roelof Harm

(56) References cited:
- EP-A- 1 006 036
- WO-A-98/05548
- DE-A1- 3 739 663
- DE-A1- 10 121 918
- DE-A1- 10 236 591
- DE-A1- 19 817 512
- DE-C1- 10 126 072
- NL-C2- 1 016 147
- US-A- 5 005 677
- US-A- 5 454 550
- US-B1- 6 634 627

## Description

The invention relates to a spring device for motor vehicles, a front fork, spring leg or shock absorber provided with such a spring device, a motorcycle spring device and a motorcycle provided with such a spring device.

Complicated spring devices are being used all the time on cars and motorcycles in order to obtain better handling, greater safety and improved control.

Dutch Patent Specification 1 016 147 discloses a spring leg with integral adjusting device, in which the adjusting device is designed for setting the preload of a coil spring fitted in the spring leg. In a motorcycle, for example, it is often desirable to adjust the spring characteristic of the spring device fitted in the damper or front fork according to changed conditions. Such conditions can include, for example, a sportier performance, in which case a higher spring constant is required, but it can also be the conditions where a more recreational use of the motorcycle involves carrying luggage and/or a passenger. In this case the load on the spring increases considerably, in the latter case the load even increasing by a factor of 2 compared with the weight of an unladen motorcycle. The spring leg known from the abovementioned Dutch patent specification makes it possible for the ride height of the motorcycle to be adjusted to the weight of the load by giving a certain preload to the coil spring fitted in the spring leg, with a virtually linear spring characteristic. The term ride height should be understood as denoting the distance of the frame of the motorcycle from the road surface. A problem of the known device is, however, that the linear characteristic of the spring device remains the same, irrespective of the preload provided. This means that the spring constant of the coil spring is too low when it is subjected to a load with a passenger or luggage, so that the spring travels in and out too far during riding of the vehicle. This produces poorer handling characteristics and can consequently also lead to dangerous situations.

German Patent Application DE-3739663 discloses a shock absorber with a spiral spring which rests upon a dish element and is connected in series to a second spiral spring. The two spiral springs together in the first instance provide for a low spring stiffness. With a certain compression the dish element is blocked, so that one of the spiral springs becomes inactive. From that moment onwards the spring stiffness of the spring device rises abruptly and is determined by only one of the spiral springs.

A problem in the case of this shock absorber is, however, the abrupt transition, and the fact that the spring still travels in and out too far during riding of the vehicle. This is particularly so in the case of a maximum load on the motorcycle, for example with an extra passenger and extra luggage.

The object of the present invention is to overcome the abovementioned disadvantages at least partially or to provide a usable alternative. In particular, the object of the invention is to provide a spring device for a motor vehicle with an improved, preferably adjustable spring characteristic.

This object is achieved by a spring device according to claim 1. The spring device in this case comprises a damper system with a damper cylinder and a damper piston which is movable inside the damper cylinder. The spring device furthermore comprises a spring element, which comprises a first compression spring. The compression spring in particular is fitted coaxially relative to the damper system. The first compression spring is confined between a first and a second spring base. The ends of the compression spring rest upon the first and second spring bases. For this purpose, the first and second spring bases can be in the form of separate parts. However, the first and/or second spring base can also be integral with another part of the spring device. Characteristic of the spring device is the fact that the first compression spring is designed in such a way that said compression spring has a load-dependent, at least partially variable spring characteristic. In other words, it has a spring characteristic whose value is at least partially variable and is dependent upon the magnitude of the load upon the first compression spring and its spring travel. The spring characteristic of the first compression spring is defined here by the load divided by the spring travel. In the spring device according to the invention the spring characteristic of the first compression spring is therefore not constant, but variable. It advantageously means that the spring behaviour can automatically adjust to the load situation without the spring travel becoming too great or prematurely running against a stop.

The value of the spring characteristic preferably increases when the load upon the first compression spring increases. In particular, the first compression spring has a progressively increasing spring characteristic, so that with an increasing load the spring travel increases less than proportionally. As a result of this, the spring travel of the first compression spring remains advantageously short when there is a high load upon the first compression spring. A high load upon the first compression spring corresponds, for example, to an extra passenger and/or luggage on a motorcycle. Because of this design of the first compression spring in the spring device according to the invention, the motorcycle will not spring inwards and outwards too far during riding of the vehicle. The result is that the handling characteristics remain optimum and dangerous situations are avoided.

In one embodiment according to the invention the first compression spring comprises a body made of a resilient, substantially solid material. This produces a robust design, which also has the desired variable spring characteristic. This material is preferably an elastomeric material. Such material is found to be suitable for obtaining the robust design, so that wear remains limited. The spring characteristic of an elastomeric material is not constant. The spring travel is not proportionate to the load upon the elastomeric material. The resistance of the elastomeric material will increase with increased load upon the material. Owing to the increased values of the spring characteristic, this results in an increasingly short spring travel with increasing loads. When this material is used in a shock absorber for a motorcycle it results in a limited and controllable degree of inward spring and outward spring, which has an advantageous effect on the handling characteristics of the motorcycle.

The first compression spring can be made up of a stack of various bodies of different materials so as to obtain a desired spring characteristic. The elastomer is, for example, a polyurethane material (foam) or a rubber.

The spring element of the shock absorber furthermore comprises a second compression spring, which in particular is provided in series with the first compression spring along a longitudinal axis. The second compression spring can advantageously be formed by a spiral spring of the type normally used in the case of spring devices for motor vehicles.

The spring element preferably comprises a spiral spring as the second compression spring and as the first compression spring a solid body of, for example, the abovementioned elastomer, which springs are provided in series along a longitudinal axis.

The spiral spring as the second compression spring here can as usual have a substantially constant spring characteristic. Through the interaction of the second compression spring with the first compression spring, the value of the total spring characteristic is now also dependent upon the magnitude of the load upon it over at least part of the spring travel.

This embodiment is found to be preferable for use in a motorcycle, since the spring characteristic obtained with it can be adjusted relatively easily in a continuously variable manner.

Furthermore, the spring device according to the invention comprises a blocking means for limiting the spring travel of at least one of the compression springs. .

The spring travel of the first compression spring is only partially limited by the blocking means. The part of the first compression spring that is not blocked by the blocking means can then advantageously serve as damping material. By blocking only part of the first compression spring, a situation in which materials bump hard against each other is avoided, and full blocking is obtained only with a maximum inward spring of the unblocked part of the first compression spring. This can be, for example, the maximum inward spring of the abovementioned polyurethane material. Thus a gradual increase without abrupt transition also occurs in the spring characteristic when several compression springs are placed in series in combination with spring-travel-dependent blocking means. When used in a motorcycle this improves the handling characteristics and the ride.

In one embodiment adjusting means are provided for manually controllable adjustment of the blocking distance. The manual control makes this embodiment simple to use and extremely reliable in use.

In another embodiment provision is made for adjusting means which are equipped with electrical means for electrically adjusting the blocking distance. This is a more luxurious embodiment, which can also provide a simple regulation of the spring characteristic. In this way the spring characteristic can be changed, so that, for example, when it is used in a motorcycle it is possible to achieve the correct ride height relative to the road surface, combined with the correct spring characteristic for achieving better handling characteristics.

The adjustment of the adjusting means is preferably continuously variable, so that a user can adapt the spring characteristic even more accurately to his or her specific requirements and to the current conditions. In the case of a motor vehicle these are, for example, the quality of the road and the weather conditions.

In one embodiment an opening is provided in the spring element, and the blocking means have a blocking member with a projection which corresponds to the opening of the spring element, the blocking member being fitted movably so as to fill up the opening over the desired blocking distance. This construction is found to provide a reliable and relatively simple solution. The simplicity makes the costs relatively limited.

In one embodiment the opening is provided so as to be circular symmetrical around a longitudinal axis of the spring element.

In one embodiment the blocking member is provided so as to be circular symmetrical around the longitudinal axis of the spring element.

In one embodiment the blocking member is made of steel of a desired hardness.

In one embodiment the blocking means have a sleeve provided with grooves for moving the blocking member in and out of the opening.

Further preferred embodiments are described in the subclaims. The spring device according to the invention is particularly suitable for use as a motorcycle shock absorber.

According to a further aspect, the present invention provides a shock absorber, spring leg or front fork having a spring device of the type described above.

According to another aspect, the invention provides a motorcycle, provided with at least one spring device of the type described above.

Further advantages and features are explained with reference to the appended drawings, in which:
Fig. 1 shows a graph of the spring characteristic of a spring which is adjustable according to the prior art;
Fig. 6 shows a cross section of a spring device in a third embodiment, in a first use position;
Fig. 7 shows the spring device of Fig. 6 in a second use position; and
Fig. 8 shows the spring device of Fig. 6 in a third use position.

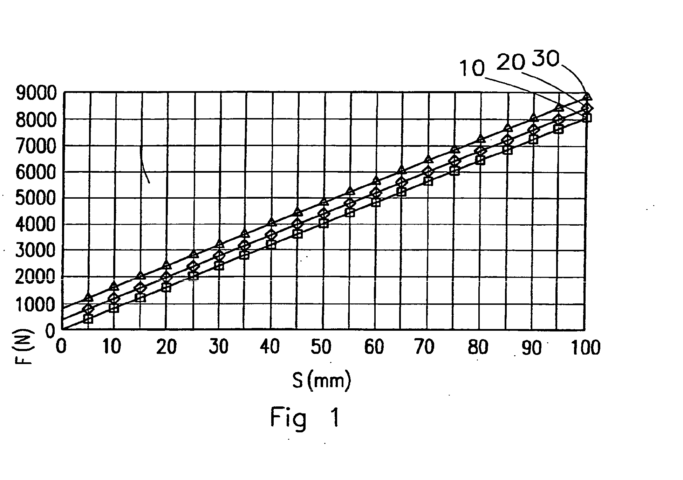

Fig. 1 shows the spring characteristics of a linear spring, such as a spiral spring, which approximates the spring characteristic of a spring system according to the prior art, of the type incorporated in shock absorbers, front forks, dampers and other sprung parts of motorcycles, but also, for example, in cars and other vehicles. The spring characteristic of such a linear spring is approximately linear. This means that the compression or stroke S (mm) at a particular compression force F (N) has an approximately linear curve (line 10 in Fig. 1). In order to ensure that at a higher load a motorcycle is still provided with a desired static ride height relative to the road surface, i.e. the desired inward spring of the front or rear side of the frame of the motorcycle in the static state, such a linear spring can be provided with a preload, as shown by the lines 20 and 30. The spring on which Fig. 1 is based has a spring stiffness of 80 N/mm, which without preload the curve of line 10 shows. If such a spring is provided with a preload of 5 mm, the curve of line 20 is obtained. If the preload is increased further, a spring characteristic with a curve that is shown by the line 30 is obtained. It can be seen clearly in Fig. 1 that, although the preload provides a certain force F at a stroke of 0 mm, so that the motorcycle has the correct height in the unladen state, the further curve of the spring characteristic remains even with the stroke. However, with an increase in the weight, as a result of luggage, a passenger or both, the load is greater than the load with only one rider. In other words, the spring constant of the spring characteristic is too low and during riding the motorcycle deflects relatively too far, or in any case further than is desirable for optimum handling characteristics.

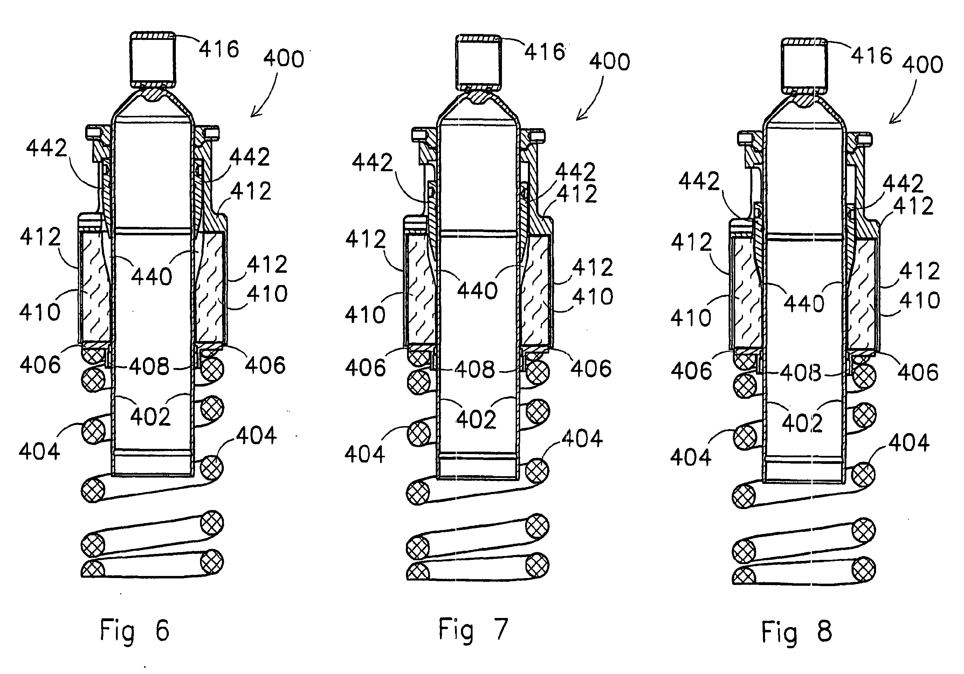

In a embodiment (Figs. 6, 7, 8) spring device 400 comprises tube 402 inside a spiral spring 404 which rests upon dish 406 with flange 408. The spiral spring 404 is fitted in series with resilient body 410, which body is enclosed by casing 412. The resilient body 410 is provided on the inside with an opening 440 of a particular shape, which corresponds to the shape of a blocking member 442 to be slid into it, which blocking member is made of a hard material, for example of steel, and can be moved by means of a mechanism The blocking member is substantially of a conical shape and can be fitted over a certain blocking distance in the opening 440 in the resilient body. The blocking is therefore not obtained by a mechanical block, but by a blocking of the maximum inward spring of the polyurethane itself. The third embodiment has an additional advantage in that the spring characteristic has a very gradual curve. This improves the handling characteristics further and improves the ride.

Figures 6, 7 and 8 show respective use states in which the full spring travel is available (Fig. 6), the spring travel is partially blocked (Fig. 7), and the spring travel is blocked to the maximum degree (Fig. 8) for the greatest possible spring force.

The present invention is not limited to the preferred embodiments of it described above, in which many different changes and modifications are possible within the scope of the appended claims. For instance, it is possible to use a spring element which combines the above examples, in which case the spring element comprises a suitable combination of a spiral spring, an air spring and/or a solid resilient body. The compression spring with the progressively increasing spring characteristic with increasing load and increasing spring travel respectively has such dimensions that it can be compressed over at least 10 mm, and in particular over at least 20 mm. The tubular element around which the compression springs are fitted can form part of a piston-cylinder system which likewise forms part of the spring device.

A simple user-friendly spring device is thus provided, which improves the ride, is easy to produce and is reliable in use.

## Claims

1. Spring device for a motor vehicle, comprising:
- a damper system comprising a damper cylinder (402) and a damper piston which is movable in said damper cylinder;
- a spring element comprising at least a first compression spring (410), which in particular is fitted coaxially relative to the damper system,
the first compression spring (410) being confined between a first and a second spring base (406),
and a second compression spring (404) which is positioned along a longitudinal axis in series with the first compression spring (410); and
- a blocking means (442) for limiting the spring travel of at least one of the compression springs;
wherein the first compression spring (410) comprises at least one body made of a resilient, substantially solid material, which body has a spring characteristic which is defined by the load upon the first compression spring divided by the spring travel,
**characterized in that** the spring characteristic is variable in dependency of the magnitude of the load upon the first compression spring
, wherein said blocking means only partially limit the spring travel of the first compression spring (410), wherein only a part of the first compression spring is blocked by the blocking means.

2. Spring device according to claim 1, in which the value of the spring characteristic increases when the load upon the first compression spring (110) increases.

3. Spring device according to one of the preceding claims, in which the first compression spring is made of an elastomeric material.

4. Spring device according to one of the preceding claims, in which the second compression spring (104) has a substantially constant spring characteristic.

5. Spring device according to one of the preceding claims in which the blocking means (122) is tubular and the first compression spring is fitted around the blocking means and on the outside is enclosed by a casing (112).

6. Spring device according to one of the preceding claims , in which the first compression spring (410) comprises an opening (440) which corresponds to a projection as the blocking member (442) on the blocking means.

7. Spring device according to claim 6, in which the opening in the first compression spring and the corresponding projection of the blocking means are conical, such that over the blocking distance the opening can be filled up with the blocking member.

8. Spring device according to claim 6 or 7, in which the opening is provided so as to be circular symmetrical around the longitudinal axis of the spring element.

9. Spring device according to one of claims 6 - 8, in which the blocking member is provided so as to be circular symmetrical around the longitudinal axis of the spring element.

10. Spring device according to one of the preceding claims in which the blocking means is axially adjustable over a blocking distance by means of an adjusting means.

11. Spring device according to claim 10, in which the blocking means is adjustable in the axial direction over a screw thread.

12. Spring device according to claim 10 or 11, in which the blocking distance is adjustable over a maximum of 20 mm.

13. Spring device according to claim 11 or 12,
- in which the blocking means comprises a threaded sleeve, which is fitted rotatably around a correspondingly threaded tube and is connected to the adjusting means,
- in which the blocking means furthermore comprise a dish element fitted so as to be slidable around the tube, which dish element is fitted at a predetermined location in the spring element and is blockable by the sleeve.

14. Spring device according to one of claims 10 - 13, in which the adjusting means are manually controllable for adjustment of the blocking distance.

15. Spring device according to one of claims 10 - 14, in which the blocking means is connected to electrical means comprising an electric motor, in such a way that the blocking means is adjustable in the axial direction.

16. Spring device according to claim 15, in which the blocking means is provided on the peripheral edge with teeth, the electric motor being connected to the blocking means by way of the teeth.

17. Spring device according to one of the preceding claims, designed as a motorcycle spring device, in particular as a shock absorber, spring leg or front fork.

18. Motorcycle provided with a spring device according to one of claims 1 - 17.

## Patentansprüche

1. Federvorrichtung für ein Motorfahrzeug, mit:
- einem Dämpfungssystem, umfassend einen Dämpfungszylinder (402) und einen Dämpfungskolben, der in dem Dämpfungszylinder beweglich ist;
- einem Federelement, umfassend wenigstens eine erste Druckfeder (410), die insbesondere koaxial in Bezug zu dem Dämpfungssystem eingesetzt ist,
wobei die erstes Druckfester (410) zwischen einer ersten und einer zweiten Federbasis (406) eingespannt ist,
und eine zweite Druckfeder (404), die entlang einer Längsachse in Reihe mit der ersten Druckfeder (410) positioniert ist; und
- einer Blockiereinrichtung (442) zum Begrenzen des Federweges von wenigstens einer der Druckfedern;
in welcher die erste Druckfeder (410) wenigstens einen Körper aus einem elastischen, im Wesentlichen festen Material aufweist, wobei dieser Körper eine Federeigenschaft hat, die durch die Last auf die erste Druckfeder, geteilt durch den Federweg, definiert ist,
**dadurch gekennzeichnet, dass** die Federeigenschaft in Abhängigkeit von der Größe der Last auf der ersten Druckfeder variabel ist,
wobei die Blockiereinrichtung nur teilweise den Federweg der ersten Druckfeder (410) begrenzt, wobei nur ein Teil der ersten Druckfeder durch die Blockiereinrichtung blockiert wird.

2. Federvorrichtung nach Anspruch 1, in welcher der Wert der Federeigenschaft zunimmt, wenn die Last auf die erste Druckfeder (110) zunimmt.

3. Federvorrichtung nach einem der vorhergehenden Ansprüche, in welcher die erste Druckfeder aus einem elastomeren Material hergestellt ist.

4. Federvorrichtung nach einem der vorhergehenden Ansprüche, in welcher die zweite Druckfester (104) eine im Wesentlichen konstante Federeigenschaft hat.

5. Federvorrichtung nach einem der vorhergehenden Ansprüche, in welcher die Blockiereinrichtung (122) rohrförmig ist und die erste Druckfeder um die Blockiereinrichtung herum sitzt und auf der Außenseite durch ein Gehäuse (112) eingeschlossen ist.

6. Federvorrichtung nach einem der vorhergehenden Ansprüche, in welcher die erste Druckfeder (410) eine Öffnung (440) umfasst, welche mit einem Vorsprung als das Blockierelement (442) auf der Blockiereinrichtung korrespondiert.

7. Federvorrichtung nach Anspruch 6, in welcher die Öffnung in der ersten Druckfeder und der korrespondierende Vorsprung der Blockiereinrichtung konisch sind, derart, dass die Öffnung über die Blockierstrecke mit dem Blockierelement gefüllt werden kann.

8. Federvorrichtung nach Anspruch 6 oder 7, in welcher die Öffnung so vorgesehen ist, dass diese kreisförmig symmetrisch um die Längsachse des Federelements verläuft.

9. Federvorrichtung nach einem der Ansprüche 6 bis 8, in welcher das Blockierelement so vorgesehen ist, dass dieses kreisförmig symmetrisch um die Längsachse des Federelements herum verläuft.

10. Federvorrichtung nach einem der vorhergehenden Ansprüche, in welcher die Blockiereinrichtung über eine Blockierstrecke mithilfe einer Einstelleinrichtung axial einstellbar ist.

11. Federvorrichtung nach Anspruch 10, in welcher die Blockiereinrichtung der axialen Richtung über ein Schraubengewinde einstellbar ist.

12. Federvorrichtung nach Anspruch 10 oder 11, in welcher die Blockierstrecke über ein Maximum von 20 mm einstellbar ist.

13. Federvorrichtung nach Anspruch 11 oder 12,
- in welcher die Blockiereinrichtung eine mit Gewinde versehene Hülse umfasst, die drehbar um ein entsprechend mit Gewinde versehenes Rohr angebracht ist und mit der Einstelleinrichtung verbunden ist,
- in welcher die Blockiereinrichtung ferner ein Plattenelement umfasst, das so angebracht ist, dass dieses um das Rohr herum gleitfähig ist, wobei das Plattenelement an einer vorbestimmten Stelle in dem Federelement sitzt und durch die Hülse blockierbar ist.

14. Federvorrichtung nach einem der Ansprüche 10 bis 13, in welcher die Einstelleinrichtung zur Einstellung der Blockierstrecke manuell steuerbar ist.

15. Federvorrichtung nach einem der Ansprüche 10 bis 14, in welcher die Blockiereinrichtung mit einer elektrischen Einrichtung verbunden ist, die einen Elektromotor aufweist, derart, dass die Blockiereinrichtung in der axialen Richtung einstellbar ist.

16. Federvorrichtung nach Anspruch 15, in welcher die Blockiereinrichtung auf der Umfangskante mit Zähnen versehen ist, wobei der Elektromotor mit der Blockiereinrichtung über die Zähne verbunden ist.

17. Federvorrichtung nach einem der vorhergehenden Ansprüche, ausgelegt als eine Federeinrichtung für ein Motorrad, insbesondere als Stoßdämpfer, Federbein oder Vordergabel.

18. Motorrad mit einer Federvorrichtung nach einem der Ansprüche 1 bis 17.

## Revendications

1. Dispositif de ressort pour un véhicule à moteur, comprenant :
un système d'amortisseur comprenant un cylindre d'amortisseur (402) et un piston d'amortisseur qui est mobile dans ledit cylindre d'amortisseur ;
un élément de ressort comprenant au moins un premier ressort de compression (410), qui est en particulier monté de manière coaxiale par rapport au système d'amortisseur,
le premier ressort de compression (410) étant confiné entre une première et une seconde base de ressort (406),
et un second ressort de compression (404) qui est positionné le long d'un axe longitudinal en série avec le premier ressort de compression (410) ; et
des moyens de blocage (442) pour limiter le déplacement de ressort d'au moins l'un des ressorts de compression ;
dans lequel le premier ressort de compression (410) comprend au moins un corps réalisé avec une matière élastique sensible solide, lequel corps a une caractéristique de rappel qui est définie par la charge sur le premier ressort de compression divisée par le déplacement du ressort,
**caractérisé en ce que** la caractéristique de rappel est variable en fonction de la grandeur de la charge sur le premier ressort de compression,
dans lequel lesdits moyens de blocage limitent uniquement partiellement le déplacement de ressort du premier ressort de compression (410), dans lequel seule une partie du premier ressort de compression est bloquée par les moyens de blocage.

2. Dispositif de ressort selon la revendication 1, dans lequel la valeur de la caractéristique de rappel augmente lorsque la charge sur le premier ressort de compression (110) augmente.

3. Dispositif de ressort selon l'une quelconque des revendications précédentes, dans lequel le premier ressort de compression est réalisé avec un matériau élastomère.

4. Dispositif de ressort selon l'une quelconque des revendications précédentes, dans lequel le second ressort de compression (104) a une caractéristique de rappel sensiblement constante.

5. Dispositif de ressort selon l'une quelconque des revendications précédentes, dans lequel les moyens de blocage (122) sont tubulaires et le premier ressort de compression est monté autour des moyens de blocage et sur l'extérieur, est enfermé par un boîtier (112).

6. Dispositif de ressort selon l'une quelconque des revendications précédentes, dans lequel le premier ressort de compression (410) comprend une ouverture (440) qui correspond à une saillie en tant qu'élément de blocage (442) sur les moyens de blocage.

7. Dispositif de ressort selon la revendication 6, dans lequel l'ouverture dans le premier ressort de compression et la saillie correspondante des moyens de blocage sont coniques, de sorte que sur la distance de blocage, l'ouverture peut être remplie avec l'élément de blocage.

8. Dispositif de ressort selon la revendication 6 ou 7, dans lequel l'ouverture est prévue pour être symétrique de manière circulaire autour de l'axe longitudinal de l'élément de ressort.

9. Dispositif de ressort selon l'une quelconque des revendications 6 à 8, dans lequel l'élément de blocage est prévu afin d'être symétrique de manière circulaire le long de l'axe longitudinal de l'élément de ressort.

10. Dispositif de ressort selon l'une quelconque des revendications précédentes, dans lequel les moyens de blocage sont axialement ajustables sur une distance de blocage au moyen de moyens d'ajustement.

11. Dispositif de ressort selon la revendication 10, dans lequel les moyens de blocage sont ajustables dans la direction axiale sur un filetage de vis.

12. Dispositif de ressort selon la revendication 10 ou 11, dans lequel la distance de blocage est ajustable sur un maximum de 20 mm.

13. Dispositif de ressort selon la revendication 11 ou 12,
dans lequel les moyens de blocage comprennent un manchon fileté qui est monté en rotation autour d'un tube fileté de manière correspondante et est raccordé aux moyens d'ajustement,
dans lequel les moyens de blocage comprennent en outre un élément en forme de plat monté pour pouvoir coulisser autour du tube, lequel élément en forme de plat est monté à un emplacement prédéterminé dans l'élément de ressort et peut être bloqué par le manchon.

14. Dispositif de ressort selon l'une quelconque des revendications 10 à 13, dans lequel les moyens d'ajustement sont manuellement contrôlables pour l'ajustement de la distance de blocage.

15. Dispositif de ressort selon l'une quelconque des revendications 10 à 14, dans lequel les moyens de blocage sont raccordés à des moyens électriques comprenant un moteur électrique, de sorte que les moyens de blocage sont ajustables dans la direction axiale.

16. Dispositif de ressort selon la revendication 15, dans lequel les moyens de blocage sont prévus sur le bord périphérique avec des dents, le moteur électrique étant raccordé aux moyens de blocage au moyen des dents.

17. Dispositif de ressort selon l'une quelconque des revendications précédentes, conçu en tant que dispositif de ressort pour motocyclette, en particulier comme un amortisseur, une patte de ressort ou une fourche avant.

18. Motocyclette prévue avec un dispositif de ressort selon l'une quelconque des revendications 1 à 17.
